# EUROPÄISCHE PATENTANMELDUNG

(11) **EP 3 974 925 A1**
(43) Veröffentlichungstag der Anmeldung: **30.03.2022**
(21) Anmeldenummer: 20198887.0
(22) Anmeldetag: 29.09.2020
(51) Int. Cl.: G05B 19/4097

(54) **HERSTELLEN EINES OBJEKTS**

(71) Anmelder: Siemens Aktiengesellschaft, 80333 München (DE)
(72) Erfinder: Krause, Stefan, 04177 Leipzig (DE); Lohse, Oliver, 85614 Kirchseeon (DE); Meyer-Hentschel, Michael Johannes, 81667 München (DE); Myszkowski, Adam, 81739 München (DE); Robl, Peter, 94133 Röhrnbach (DE)

(57) **Zusammenfassung**

Zusammenfassend betrifft die Erfindung ein Verfahren zum Herstellen eines Objekts (100) in mehreren HerstellungsSchritten (S1,...,S3) auf Basis eines Modells (M100) des Objekts (100), wobei das Modell (M100) aufweist:
- Teilmodelle (M101,...,M104), die geometrische Merkmale (G120, G130, G135, G140) der Herstellungs-Schritte (S1,...,S3) aufweisen, und
- funktionale Merkmale (F120, F135, F104), die jeweils zumindest einem der geometrischen Merkmale (G120, G130, G135, G140) zugeordnet sind. Um ein verbessertes modellbasiertes Verfahren zur Herstellung von Objekten anzugeben und die Information zu verbessern werden die Schritte vorgeschlagen:
- Bereitstellen des Modells (M100) des Objekts (100),
- Extrahieren des Teilmodells (M101,...,M104) mit den dazugehörigen geometrischen Merkmale (G120, G130, G135, G140) und funktionalen Merkmalen (G120, G130, G135, G140, F120, F135, F104) für den aktuellen Schritt (S1,...,S3) und
- Durchführen des Herstellungs-Schritts (S1,...,S3) zum Herstellen des Objekts (100) auf Basis des extrahierten Teilmodells (M101,...,M104) und der extrahierten Merkmale (G120, G130, G135, G140, F120, F135, F104). Weiterhin betrifft die Erfindung ein Verfahren zum Erzeugen eines Modells (M100) eines Objekts (100).

## Beschreibung

Die Erfindung betrifft ein Verfahren zum Herstellen eines Objekts. Weiterhin betrifft die Erfindung ein Verfahren zum Erzeugen eines Modells eines Objekts.

Ein derartiges Verfahren kommt beispielsweise in industriellen Fertigungen wie im Maschinenbau zum Einsatz.

Für die Herstellung von Produkten, im Folgenden Objekte genannt, müssen Einzelteile, also Teil-Objekte gefertigt und bereitgestellt werden. Diese Einzelteile werden bspw. in CAD-Programmen modelliert und produktspezifisch ausgeprägt. Konkret besteht aktuell ein Bruch in der automatisierten, durchgängigen Prozesskette von der Konstruktion bis hin zur vollständigen modellbasierten agilen Arbeitsplanung, die durch nicht wertschöpfende Tätigkeiten kompensiert werden muss. Fertigungsplaner haben anhand von Erfahrungen, Arbeitsplatzbeschreibungen und Wissen über die vorhandenen Arbeitsplätze, Hilfsmittel, Maschinen sowie Steuerungsausprägungen auf den Maschinen, Produkte/Einzelteile zugeordnet. Dabei werden Fähigkeiten, Potentiale und Auslastungen teilweise übersehen und somit nicht das optimale Potential der Produktionseinrichtungen bzw. des Produktionsprozesses entfaltet.

Der Erfindung liegt die Aufgabe zugrunde, ein verbessertes modellbasiertes Verfahren zur Herstellung von Objekten anzugeben.

Diese Aufgabe wird durch ein Verfahren mit den im Anspruch 1 angegebenen Merkmalen gelöst.

Das Verfahren zum Herstellen eines Objekts in mehreren Herstellungs-Schritten basiert dabei auf einem Modell des Objekts. Das Modell weist dazu Teilmodelle auf, die geometrische Merkmale der Herstellungs-Schritte aufweisen. Die Teilmodelle können dabei aus den im Modell vorhandenen Informationen abgeleitet werden. Das Modell weist weiterhin funktionale Merkmale, die jeweils zumindest einem der geometrischen Merkmale zugeordnet sind. Das Objekt kann dabei aus mehreren Teilobjekten zusammengesetzt sein, wobei die Teilobjekte jeweils durch ein Teilmodell abgebildet sein können.

Die geometrischen Merkmale bilden dabei die geometrische Ausgestaltung des Objekts und sind dabei vorzugsweise in einem 3D-Modell je Teil-Modell hinterlegt. Weiterhin vorzugsweise sind die geometrischen Merkmale jeweils Oberflächen in den 3D-Modellen zugewiesen.

Da die Herstellung des Objekts aber nicht nur auf Basis von geometrischen Features (Merkmalen) basiert, sondern auch funktionale Kriterien erfüllt werden müssen, so können den geometrischen Merkmalen auch funktionale Merkmale zugewiesen werden. Diese funktionalen Merkmale oder auch nichtgeometrische Merkmale umfassen dabei jegliche Merkmale, die zwar auch eine geometrische Form haben können, aber vordergründig eine Funktion erfüllen. In anderen Worten sind funktionale Merkmale am Modell hinterlegte nichtgeometrische Informationen die notwendige Prozessparameter für den Herstellungsprozess liefern und zur Funktionsherstellung/- sicherstellung dienen. Darunter fallen beispielsweise Gewinde inkl. deren Gewindeparameter, Härte- und Verzahnungsangaben, technologiebedingte Informationen z. B. Abdecken von Flächen oder Bereichen für das Härten im Ofen. Als funktionale Merkmale werden in der vorliegenden Erfindung auch die einer geometrischen Dimensionen zugewiesenen Toleranzen verstanden. Die Einhaltung von Toleranzen bzw. deren Ausgestaltung beeinflusst unmittelbar die mögliche Auswahl von Fertigungsanlagen und Technologie.

Das Erfindungsgemäße Verfahren umfasst die Schritte:
- Bereitstellen des Modells des Objekts,
- Extrahieren des Teilmodells mit den dazugehörigen geometrischen und/oder funktionalen Merkmalen für den aktuellen Schritt und
- Durchführen des Herstellungs-Schritts zum Herstellen des Objekts auf Basis des extrahierten Teilmodells und der extrahierten Merkmale.

Das Modell des Objekts kann dabei aus einer CAD Software bereitgestellt werden. Die unterschiedlichen Teilmodelle können ebenso in der CAD Software angelegt werden. Dazu kann eine Funktion / ein Algorithmus, zum Beispiel in NX-Open (offene Schnittstelle zum CAD-System NX) oder C++ (Hochprogrammiersprache) programmiert sein, die mit Hilfe eines CAD-Kernels aktiv im CAD-Programm oder über einen Prozess aus dem PLM-System im "silent mode" der CAD-Software (läuft im Batch) ausgeführt wird.

In einer weiteren Ausführungsform weist das Modell für ein oder mehrere der funktionalen und/oder geometrischen Merkmale Anforderungen auf. Die Anforderungen werden durch Fähigkeiten von Fertigungsanlagen erfüllt. Die Fähigkeiten werden dabei von Fertigungsanlagen zum Durchführen zumindest eines Herstellungs-Schritts zur Verfügung gestellt. Dazu werden das Modell und seine Teilmodelle mit seinen geometrischen Merkmalen um die notwendigen Fähigkeiten zur Herstellung des repräsentierten Bauteils (Objekts) ergänzt. Beispielsweise können alle geometrischen und nicht geometrischen (funktionalen) Merkmale aus dem Modell bzw. aus den Teilmodellen ausgelesen werden und anhand eines Regelwerks / einer Library automatisiert die benötigten Fähigkeiten zur Herstellung des Teilobjekts identifiziert und zugewiesen werden. Die Anforderungen können bereits direkt mit den geometrischen Merkmalen verknüpft werden, dies kann bspw. direkt beim CAD Design Prozess ohne einen CAM Prozess erfolgen. Dabei bedingen Härte-, Oberflächen-,Verzahnungs- und Qualitätsangaben sowie vorhandene Fertigungstechnologien nachfolgende Schleif-, Bürst-, Wucht-und Waschprozessschritte.

In einer weiteren Ausführungsform umfasst das Herstellen des Objekts zumindest eine Kombination aus zwei oder mehr der Fertigungsverfahren Urformen, Umformen, Trennen, Fügen, Beschichten und/oder Ändern der Stoffeigenschaften auf. Das Modell weist weiterhin geometrische und funktionale Merkmale für jedes der umfassten Fertigungsverfahren auf. Zum Herstellen von Objekten sind in der Regel mehrere grundlegende Fertigungsverfahren notwendig. Diese grundlegenden Fertigungsverfahren werden in der Regel über jeweils eine eigene zweidimensionales technische Fertigungszeichnung und Fertigungsanweisungen im Arbeitsplan gesteuert, die jeweils separat generiert werden muss. Durch die Kombination von mehreren Fertigungsverfahren in einem Modell können Objekte vereinfacht und modellbasiert gefertigt werden.

In einer weiteren Ausführungsform umfasst das Herstellen des Objekts zumindest ein geometrisch formendes Fertigungsverfahren, insbesondere aus der Gruppe Urformen, Umformen, Trennen, Fügen, und zumindest ein die funktionalen Merkmale veränderndes Fertigungsverfahren, insbesondere aus der Gruppe Beschichten und/oder Ändern der Stoffeigenschaften, umfasst, Das Modell weist wiederum geometrische und funktionale Merkmale für jedes der umfassten Fertigungsverfahren auf. So können grundlegend verschiedene und auch die geometrischen Eigenschaften nicht verändernde Fertigungsverfahren mit die geometrischen Eigenschaften verändernden Fertigungsverfahren kombiniert werden.

In einer weiteren Ausführungsform ist zumindest eines der Teilmodelle als ein 3D-CAD-Modell des Objekts ausgebildet. Vorzugsweise existiert für jeden signifikanten Herstellungs-schritt ein 3D CAD Modell des Sollzustandes. D. h. für die wichtigen Herstellungsschritte, also beispielsweise die Herstellungsschritte in denen sich die geometrischen Merkmale des Objekts verändern, existiert ein Eingangszustand und ein Ausgangszustand jeweils als 3D CAD Modell. Der Eingangszustand ist dabei z. B. das 3D Modell des vorhergehenden Schritts.

In einer weiteren Ausführungsform umfasst das Verfahren ein Extrahieren der Merkmale für den aktuellen Herstellungs-Schritt aus dem Teilmodell und ein Umwandeln der Merkmale in Steuerbefehle, sodass eine den jeweiligen Herstellungs-Schritt ausführende Anlage, den jeweiligen Herstellungs-Schritt ausführen kann. Ein weiterer Vorteil am erfindungsgemäßen Verfahren ist es, dass die Modelle sowohl automatisiert im Herstellungsprozess zur Anwendung kommen können als auch für manuelle oder Teil manuelle Schritte.

So umfasst das Verfahren in einer ergänzenden oder alternativen Ausführungsform ein Erzeugen eines dreidimensionalen Teilmodells, welches zumindest die im aktuellen Schritt zu fertigenden Merkmale aufweist, wobei das Teilmodell eine für eine menschliche Wahrnehmung ausgestaltete Darstellung der im aktuellen Schritt zu fertigenden Merkmale aufweist. So handelt es sich hier vorzugsweise um eine 3D CAD Modell, dass um die für den aktuellen Schritt relevanten Prozesse ergänzt wurde.

In einer bevorzugten Ausführungsform stellt das für die menschliche Wahrnehmung ausgestaltete Teilmodell zumindest ein oder mehrere der folgenden funktionalen Merkmale dar:
- Gewindeparameter, insbesondere: Innengewinde, Außengewinde, Steigung des Gewindes, Durchmesser des Gewindes,
- Lagersitz,
- Weichdrehparameter,
- Hartdrehparameter,
- Härtebereich,
- Rauheitswerte,
- Härtetiefe,
- Schweißparameter,
- Klebeparameter,
- HRC-Wert,
- Schleifaufmaße,
- Freistiche,
- Verzahnungsinformationen und/oder
- Toleranzen.

So können die für den aktuellen Fertigungsschritt benötigten Informationen direkt durch das Personal aus dem Teilmodell entnommen werden.

In einer weiteren Ausführungsform umfasst das Verfahren ein Zuordnen der im aktuellen Schritt zu fertigenden Merkmale zu einer Fertigungs-Anlage. Das bedeutet in anderen Worten, dass aus den geometrischen und den funktionalen Merkmalen Informationen wie z. B. Innen-, Außengewinde, Steigung, Durchmesser, Lagersitz, Weichdreh- und Hartdrehinformationen, Härtebereich, HRC-Wert, Schleifaufmaße, Freistiche, Verzahnungsinformationen, Toleranzen, Bohrungen, Taschen, ... identifiziert werden und diese dann direkt einer Fertigungs-Anlage zugewiesen werden. Das zuweisen zur Fertigungsanlagen kann dabei auf Basis von Standard Fertigungsprozessen geschehen, das zuweisen kann aber ebenso Basis für eine Optimierung darstellen. Aus dieser Kombination aus geometrischen und nicht geometrischen Merkmalen und letztendlich Informationen werden die notwendigen Fähigkeiten (Skills) zur Bearbeitung wie z. B. Gewindedrehen, Bohren, Bohrfräsen, Drehen, Weichdrehen, Hartdrehen, Härten, Schleifen mit jeweiligen notwendigen Dimensionsinformationen je Fähigkeit abgeleitet. Der Automatisierung kann dabei erhöht werden und auch die Teil automatisierten Beziehung solche manuellen Prozessschritte werden so effizienter, da eine Kette aus Informationen, dargestellt durch die Modelle bzw. Teilmodelle direkt aus dem CAD Programm bis hin zum Fertigungspersonal besteht.

Verfahren nach einem der vorhergehenden Ansprüche, umfassend ein Aktualisieren oder Ergänzen der im aktuellen Schritt zu fertigenden Merkmale. Der Vorteil der vorliegenden modellbasierten Herstellung von Objekten ist, dass nicht auf Basis einer statischen Zeichnung gefertigt wird, sondern Modell basiert auf Basis von Merkmalen. Diese Merkmale können laufenden Prozess mit Anmerkungen versehen, Ergänzt oder direkt abgeändert werden. Dies kann beispielsweise der Fall sein, wenn ein ursprünglich vorgesehener Fertigungsprozess auf Probleme oder Herausforderungen stößt, die mit Parameteränderungen zu beheben sind. Weiterhin können Probleme im aktuellen Fertigungsprozess, die nicht kurzfristig änderbar sind wiederum direkt mit den Merkmalen verknüpft werden und dann direkt im 3D CAD Programm für das nächste zur fertigende Objekt behoben werden kann.

Die Aufgabe wird weiterhin durch ein Verfahren zum Erzeugen eines Modells eines Objekts gelöst. Das Objekt ist in mehreren Herstellungs-Schritten herzustellen. Zum Erzeugen des Modells umfasst das Verfahren die Schritte:
- Bereitstellen von Teilmodellen, die geometrische Merkmale für die Herstellungs-Schritte aufweisen,
- Zuordnen von funktionalen Merkmale zu jeweils zumindest einem der geometrischen Merkmale.

So werden in einem übergeordneten Modell die verschiedenen Herstellungsschritte in den Teilmodellen zur Verfügung gestellt , also z. B. gespeichert, wodurch auch eine durchgängige Datenhaltung gesichert ist und eine Änderungsverfolgung vereinfacht wird.

In einer weiteren Ausführungsform umfasst das Verfahren ein Zuordnen von Herstellungsverfahren zu den Merkmalen. Die Zuordnung kann durch ein Speichern der Herstellungsverfahren und/oder Herstellungsalternativen in den jeweiligen Teilmodellen realisiert werden. Es ist ebenso denkbar, dass die Herstellungsverfahren und oder Herstellungsalternativen mit den Merkmalen verknüpft werden. So muss das Modell nicht alle denkbaren Herstellungsverfahren aufweisen, eine direkte Verknüpfung ist möglich. Dies kann beispielsweise durch eine Verknüpfung mit einer übergeordneten Datenbank, die Herstellungsverfahren aufweist, realisiert werden. Es ist ebenso möglich, dass das Modell die vorteilhaft testen Fertigungsverfahren direkt selbst aufweist, sodass eine Fertigung des Objekts ohne eine Netzwerkverbindung möglich ist.

In einer weiteren Ausführungsform umfasst das Verfahren ein Erzeugen zumindest einer für eine menschliche Wahrnehmung ausgestalteten Darstellung für eines der Teilmodelle, wobei die dem Teilmodell zugeordneten Merkmale so dargestellt sind oder darstellbar sind, dass Werte der Merkmale direkt entnommen werden können. So ist die Darstellung so ausgestaltet, dass beispielsweise Toleranzen direkt entnehmbar sind.

In einer weiteren Ausführungsform umfasst das Verfahren ein Zuordnen von ein oder mehreren Anforderungen für jedes der funktionalen Merkmale. Die Anforderungen sind dabei Anforderungen bzgl. des Herstellungsprozesses und sind können dabei Fähigkeiten zugewiesen werden. Die Fähigkeiten werden von Fertigungsanlagen zum Durchführen zumindest eines Herstellungs-Schritts zur Verfügung gestellt.

Im Folgenden wird die Erfindung anhand der in den Figuren dargestellten Ausführungsbeispiele näher beschrieben und erläutert. Es zeigen:
- FIG 1: ein als Zahnrad ausgestaltetes Objekt mit seinem Modell,
- FIG 2: ein Teilmodells eines Rohlings des Zahnrads aus FIG 1,
- FIG 3: ein verzahntes Teilmodell des Zahnrads aus FIG 1 und
- FIG 4: ein Teilmodell des Zahnrads aus FIG 1 mit Nabennut,
- FIG 5: ein gehärtetes Teilmodell des Zahnrads aus FIG 1 und
- FIG 6: eine mögliche Reihenfolge von Herstellungs-Schritten anhand der Teilmodelle.

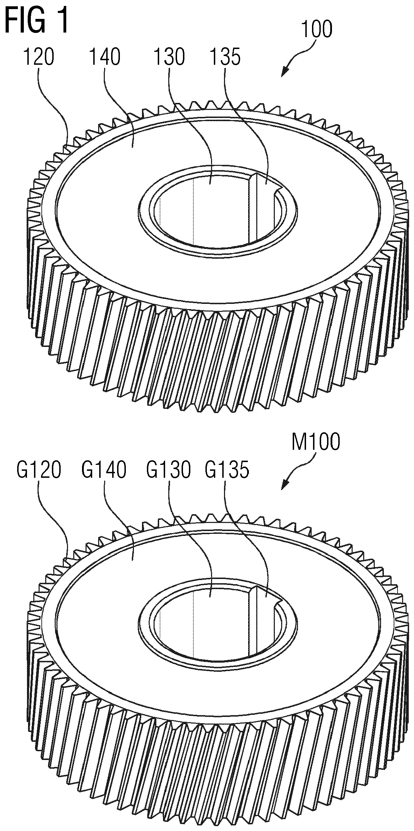

FIG 1 zeigt ein als Zahnrad ausgestaltetes Objekt 100 und daneben sein Modell M100. Das Modell M100 ist in der Figur naturgemäß lediglich durch seine geometrischen Eigenschaften dargestellt, wobei im Modell enthaltene Teilmodelle M100 aktuell ausgeblendet sind bzw. nicht dargestellt sind. Das Modell M100 stellt dabei den Endzustand des Zahnrads, also des Objekts 100 dar.

Gemäß der vorliegenden Erfindung weist das Modell M100 geometrische Merkmale G120,... und funktionale Merkmale F120,... auf. Die geometrischen Merkmale G120, G130, G135, G140,... sind durch die dreidimensionale, geometrische Form des Zahnrads 100 bestimmt. Beispielhaft eingezeichnet sind hier ein Zahnkranz 120, eine Bohrung 130 mit einer Nut 135 und eine Stirnfläche 140 des Zahnrads 100.

Diese Merkmale spiegeln sich im Modell M100 wider:
- ein geometrisches Merkmal G120 des Zahnkranz 120,
- ein geometrisches Merkmal G130 der Bohrung 130 mit einem geometrischen Merkmal G135 der Nut 135 und
- ein geometrisches Merkmal G140 der Stirnfläche 140.

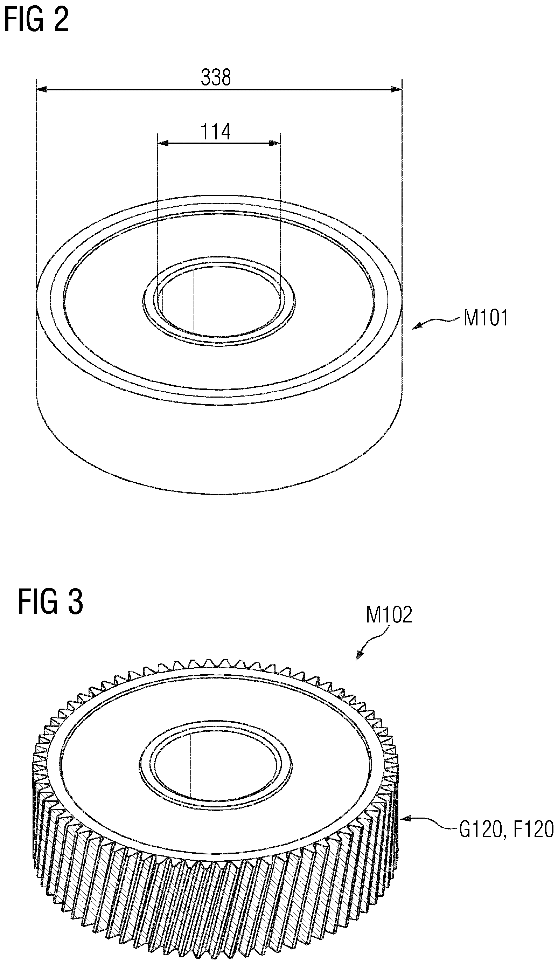

FIG 2 zeigt ein erstes Teilmodell M101, das als Basis für einen ersten Herstellungsschritt S1, einem Verzahnen des Zahnrads, dient. Das erste Teilmodell M101 stellt dabei einen Zahnrad-Rohling dar, der bestimmte Maße aufweist z. B. im vorliegenden Bespiel einen Innendurchmesser von 114,417 mit Toleranz h7 und einen Außendurchmesser von 338,77 mit Toleranz h9. Das erste Teilmodell M101 kann dabei ebenso für einen vorgelagerten Fertigungsschritt dienen, dass in dem der Zahnrad-Rohling aus einem Strangpressprofil gesägt und anschließend auf die im Teilmodell M101 enthaltenen Maße bearbeitet, z. B. gedreht, wird.

FIG 3 zeigt ein zweites Teilmodell M102, das die Merkmale für den Herstellungsschritt Verzahnen des Zahnrads aufweist. Dazu weist das Teilmodell M102 ein geometrisches Merkmal G120, den Zahnkranz, und ein funktionales Merkmal F120 mit den für das Verzahnen notwendigen Parametern und Informationen aufweist.

Im Vorliegenden Beispiel weist das Teilmodell M102 das funktionale Merkmal F120 für das Verzahnen auf, das funktionale Merkmal F120 weist damit die folgenden Parameterwerte auf:

| | | |
|---|---|---|
| Z | = 70 | (Zähnezahl) |
| m | = 4,5 mm | (Modul) |
| dk | = 338,89 | (Teilkreisdurchmesser) |
| W(N) | = 133,327 | (Zahnweite) |
| k | = 10 | (Messzähnezahl Zahnweitenmessung) |
| Profilreihe | = 4 n F4001 | |
| Flankenreihung | = rechts | |

Als Fähigkeit zum Durchführen des ersten Herstellungsschritts ist ein Verzahnungsfräsen denkbar. Das Verzahnungsfräsen als Fähigkeit kann wiederum mit Anlagen verknüpft sein und wird durch Anlagen bereitgestellt.

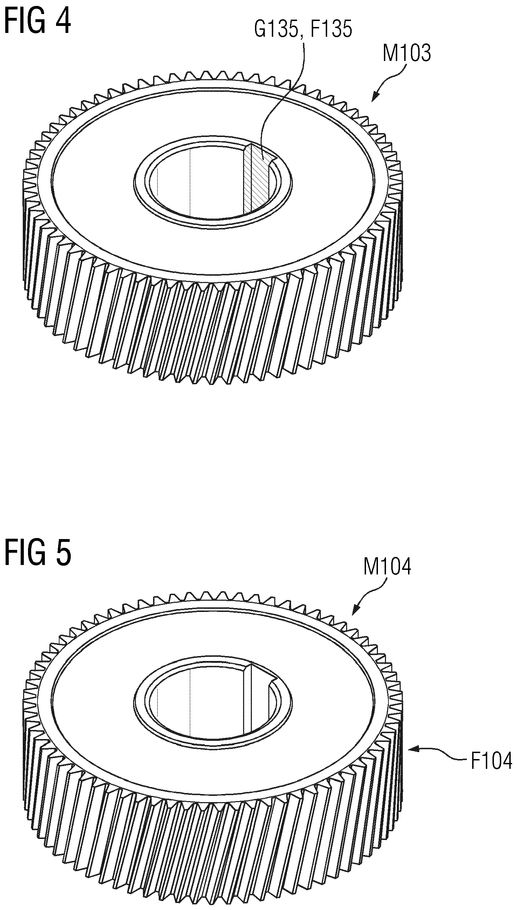

FIG 4 zeigt ein drittes Teilmodell M103, das ein bereits verzahntes Zahnrad zeigt. Ein geometrisches Merkmal G135 einer Nabennut wurde nun im Vergleich zum Teilmodell M102 aus FIG 3 eingeblendet. Das geometrische Merkmal G135 ist dabei schraffiert, um die Änderung hervorzuheben. Ein zum geometrischen Merkmal G135 korrespondierendes funktionales Merkmal F135 kann dabei die folgenden Parameterwerte aufweisen: Nut-Tiefe inkl. Toleranzangabe, Nut-Breite, Oberflächenbeschaffenheit der Nut sowie Härtungseigenschaften und dazugehörige Prozessinformationen für die Nut. Als Fähigkeit für die Nut G135 kann ein Nut räumen vorgesehen sein, alternativ ist ein Nut ziehen/stoßen denkbar. Die Fähigkeiten können wiederum von entsprechenden Anlagen bereitgestellt werden.

FIG 5 zeigt ein viertes Teilmodell M104, das für einen Herstellungsschritt Härten das funktionale Merkmal F104 mit den für das Härten notwendigen Parametern und Informationen aufweist. Da das Härten keine oder nur unwesentliche Auswirkungen auf die geometrischen Merkmale G120, G130, G135, G140 des Modells M100 hat, ist es nicht notwendig ein Teilmodell mit geänderten geometrischen Merkmalen G120, G130, G135, G140 zur Verfügung zu stellen. Es ist denkbar mit einem Härteverzugsberechnungsprogramm Informationen über den durch das Härten zu erwartenden Verzug im funktionalen Merkmal F104 zu hinterlegen. Das funktionale Merkmal F102 ist im vorliegenden Fall einer Gesamtoberfläche (nicht dargestellt) des Objekts 100 zugewiesen. Dies könnte vorliegend als die Gesamtheit der geometrischen Merkmale G120 des Zahnkranz 120, das geometrisches Merkmal G130 der Bohrung 130 mit dem geometrischen Merkmal G135 der Nut 135 und dem geometrischen Merkmal G140 der Stirnfläche 140 dargestellt werden, da hier das Zahnrad als Ganzes gehärtet wird. Eine Gruppierung der geometrischen Merkmale kann folglich ebenso durchgeführt werden.

Im Vorliegenden Fall weist das Teilmodell M104 das funktionale Merkmal F104 für das Einsatzhärten auf. Das funktionale Merkmal F104 weist die folgenden Parameterwerte auf:
- Einsatzgehärtet nach F 1555 59+3 HRC,
- (H) (550HV1)= 100 + 0,35mm und
- Bauteil angelassen.

Es wäre vorliegend weiterhin möglich, dass als funktionales Teilmerkmal ein Aufkohlungsprozess Teil des funktionalen Merkmals F104 ist und damit Teil des Modells M100 bzw. Teil des Teilmodells M104.

Als Fähigkeit könnte im vorliegenden Fall das Induktionshärten vorgesehen und/oder verknüpft sein, wobei eine Induktionshärteanlage als Anlage verknüpft sein könnte.

Nach dem Härten könnte als ein weiteres funktionales Merkmal ein Anlassen des Bauteils vorgesehen sein. Das Anlassen kann dabei bei einer bestimmten Temperatur als Parameter durchgeführt werden.

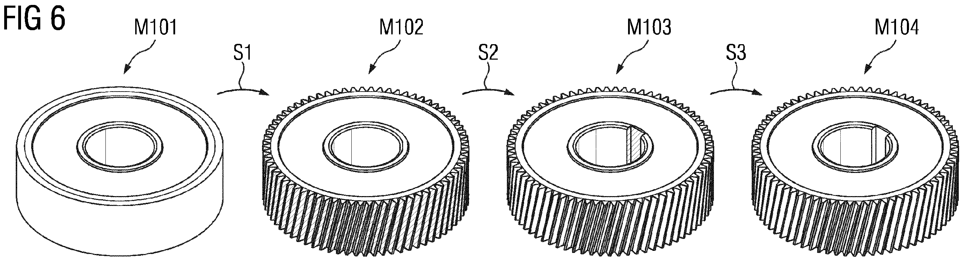

FIG 6 zeigt anhand einer Serie der in den FIG 1 bis FIG 5 gezeigten Teilmodelle M101, M102, M103 und M104 unter Anwendung der Herstellungsschritte S1, S2 und S3 beispielhaft die Anwendung der Teilmodelle M101, M102, M103 und M104 in der Herstellung des Zahnrads. Im vorliegenden Beispiel wird ein zum Teilmodell M101 korrespondierender Zahnrad-Rohling zur Verfügung gestellt, der die im Teilmodell M101 hinterlegten Maße aufweist.

Im ersten Schritt S1 wird der Zahnrad-Rohling gemäß Teilmodell M101 mit Zähnen versehen. Dazu weist das zweite Teilmodell M102 neben dem Zahnkranz 120 bzw. dessen geometrischen Merkmalen G120 auch Verzahnungsparameterwerte als funktionales Merkmal F120 auf. Weiterhin kann eine Verknüpfung zu einem Typ oder einer spezifischen Verzahnungs-Fräs-Anlage im Modell hinterlegt sein.

Im zweiten Schritt S2 wird das mit der Verzahnung versehene Zahnrad um eine Nut 135 - die Nabennut - ergänzt. Die Nut 135 weist dabei die im zugehörigen funktionalen Merkmal F135 hinterlegten Parameterwerte auf. Diese können bspw. durch eine vollautomatisierte Räumanlage als Herstellungsanlage erzeugt werden.

In einem dritten Schritt S3 wird das erzeugte Zahnrad, das bereits die erforderlichen geometrischen Merkmale aufweist, gehärtet. Die dazu notwendigen funktionalen Merkmale sind im Teilmodell M104 hinterlegt.

Die Vorteile des erfindungsgemäßen Verfahrens liegen in der Möglichkeit all die Schritte in einem Modell zu vereinen, da auf diese Weise sowohl formverändernde Herstellungsverfahren und eigenschaftsverändernde (also nicht-formändernde) Herstellungsverfahren mit einem einzigen Modell abgebildet werden können. Die dazugehörigen Teilmodelle können dabei effizient generiert werden und Speicherplatzsparend vorgehalten werden. In einer für den Fertigungsprozess optimierten Darstellung kann jeder Prozessschritt abgebildet werden und den Werkern vor Ort direkt dargestellt werden.

Nach dem Schritt S3 können noch die folgenden weiteren Schritte durch das erfindungsgemäße Modell M100 und weitere nicht gezeigte Teilmodelle abgebildet werden: Hartdrehen nach dem Härten, Verzahnungsschleifen und Hart-Räumen. Auch hier können entsprechende Parameterwerte für die Verfahren in den funktionalen Merkmalen direkt bei der Herstellung der jeweiligen Merkmale zum Einsatz kommen und in den jeweiligen Teilmodellen gespeichert sein.

Zusammenfassend betrifft die Erfindung ein Verfahren zum Herstellen eines Objekts 100 in mehreren Herstellungs-Schritten S1,...,S3 auf Basis eines Modells M100 des Objekts 100, wobei das Modell M100 aufweist:
- Teilmodelle M101,...,M104, die geometrische Merkmale G120, G130, G135, G140 der Herstellungs-Schritte S1,...,S3 aufweisen, und
- funktionale Merkmale F120, F135, F104, die jeweils zumindest einem der geometrischen Merkmale G120, G130, G135, G140 zugeordnet sind. Um ein verbessertes modellbasiertes Verfahren zur Herstellung von Objekten anzugeben und die Information zu verbessern werden die Schritte vorgeschlagen:
- Bereitstellen des Modells M100 des Objekts 100,
- Extrahieren des Teilmodells M101,...,M104 mit den dazugehörigen geometrischen Merkmale G120, G130, G135, G140 und funktionalen Merkmalen G120, G130, G135, G140, F120, F135, F104 für den aktuellen Schritt S1,...,S3 und
- Durchführen des Herstellungs-Schritts S1,...,S3 zum Herstellen des Objekts 100 auf Basis des extrahierten Teilmodells M101,...,M104 und der extrahierten Merkmale G120, G130, G135, G140, F120, F135, F104. Weiterhin betrifft die Erfindung ein Verfahren zum Erzeugen eines Modells M100 eines Objekts 100.

### Bezugszeichen

- 100: Objekt, als Zahnrad ausgebildet
- 120: Zahnkranz
- 130: Bohrung
- 135: Nut
- 140: Stirnfläche des Zahnrads
- M100: Modell des Objekts
- M101,...,M104: Teilmodelle des Objekts
- G120, G130, G135, G140: geometrische Merkmale
- F120, F135, F104: funktionale Merkmale
- S1,...,S3: Herstellungs-Schritte

## Patentansprüche

1. Verfahren zum Herstellen eines Objekts (100) in mehreren Herstellungs-Schritten (S1,...,S3) auf Basis eines Modells (M100) des Objekts (100), wobei das Modell (M100) aufweist:
- Teilmodelle (M101,...,M104), die geometrische Merkmale (G120, G130, G135, G140) der Herstellungs-Schritte (S1,...,S3) aufweisen, und
- funktionale Merkmale (F120, F135, F104), die jeweils zumindest einem der geometrischen Merkmale (G120, G130, G135, G140) zugeordnet sind,
wobei das Verfahren die Schritte umfasst:
- Bereitstellen des Modells (M100) des Objekts (100),
- Extrahieren des Teilmodells (M101,...,M104) mit den dazugehörigen geometrischen Merkmale (G120, G130, G135, G140) und funktionalen Merkmalen (G120, G130, G135, G140, F120, F135, F104) für den aktuellen Schritt (S1,...,S3) und
- Durchführen des Herstellungs-Schritts (S1,...,S3) zum Herstellen des Objekts (100) auf Basis des extrahierten Teilmodells (M101,...,M104) und der extrahierten Merkmale (G120, G130, G135, G140, F120, F135, F104).

2. Verfahren nach Anspruch 1, wobei das Modell (M100) für zumindest einen Teil der funktionalen und/oder geometrischen Merkmale (F120, F135, F104, G120, G130, G135, G140) ein oder mehrere Anforderungen aufweist, wobei die Anforderungen durch Fähigkeiten von Fertigungsanlagen zum Durchführen zumindest eines Herstellungs-Schritts (S1,...,S3) zur Verfügung erfüllt werden.

3. Verfahren nach Anspruch 1 oder 2, wobei das Herstellen des Objekts zumindest eine Kombination aus zwei oder mehr der folgenden Fertigungsverfahren umfasst:
- Urformen,
- Umformen,
- Trennen,
- Fügen,
- Beschichten und/oder
- Ändern der Stoffeigenschaften,
wobei das Modell (M100) geometrische Merkmale (G120, G130, G135, G140) und funktionale Merkmale (F120, F135, F104) für jedes der umfassten Fertigungsverfahren aufweist.

4. Verfahren nach einem der vorhergehenden Ansprüche, wobei das Herstellen des Objekts (100) zumindest ein geometrisch formendes Fertigungsverfahren, insbesondere aus der Gruppe:
Urformen, Umformen, Trennen, Fügen, und
zumindest ein die funktionalen Merkmale veränderndes Fertigungsverfahren, insbesondere aus der Gruppe: Beschichten und/oder Ändern der Stoffeigenschaften, umfasst, wobei das Modell (M100) geometrische Merkmale (G120, G130, G135, G140) und funktionale Merkmale (F120, F135, F104) für jedes der umfassten Fertigungsverfahren aufweist.

5. Verfahren nach einem der vorhergehenden Ansprüche, wobei zumindest eines der Teilmodelle (M100) ein 3D-CAD-Modell des Objekts (100) ist.

6. Verfahren nach einem der vorhergehenden Ansprüche, umfassend:
- Extrahieren der Merkmale (F120, F135, F104, G120, G130, G135, G140) für den aktuellen Herstellungs-Schritt (S1,...,S3) aus dem Teilmodell (M100) und
- Umwandeln der Merkmale (F120, F135, F104, G120, G130, G135, G140) in Steuerbefehle, sodass eine den jeweiligen Herstellungs-Schritt (S1,...,S3) ausführende Anlage, den jeweiligen Herstellungs-Schritt (S1,...,S3) ausführen kann.

7. Verfahren nach einem der vorhergehenden Ansprüche, umfassend ein Erzeugen eines dreidimensionalen Teilmodells (M100), welches zumindest die im aktuellen Schritt (S1,...,S3) zu fertigenden Merkmale (F120, F135, F104, G120, G130, G135, G140) aufweist, wobei das Teilmodell (M100) eine für eine menschliche Wahrnehmung ausgestaltete Darstellung der im aktuellen Schritt zu fertigenden Merkmale (F120, F135, F104, G120, G130, G135, G140) aufweist.
Verfahren nach Anspruch 7, wobei das für die menschliche Wahrnehmung ausgestaltete Teilmodell (M100) zumindest ein oder mehrere der folgenden funktionalen Merkmale (F120, F135, F104) darstellt:
- Gewindeparameter, insbesondere: Innengewinde, Außengewinde, Steigung des Gewindes, Durchmesser des Gewindes,
- Lagersitz,
- Weichdrehparameter,
- Hartdrehparameter,
- Härtebereich,
- Rauheitswerte,
- Härtetiefe,
- Schweißparameter,
- Klebeparameter,
- HRC-Wert,
- Schleifaufmaße,
- Freistiche,
- Verzahnungsinformationen und/oder
- Toleranzen.

8. Verfahren nach einem der vorhergehenden Ansprüche, umfassend ein Zuordnen der im aktuellen Schritt (S1,...,S3) zu fertigenden Merkmale (F120, F135, F104, G120, G130, G135, G140) zu einer Fertigungs-Anlage.

9. Verfahren nach einem der vorhergehenden Ansprüche, umfassend ein Aktualisieren oder Ergänzen der im aktuellen Schritt (S1,...,S3) zu fertigenden Merkmale (F120, F135, F104, G120, G130, G135, G140).

10. Verfahren zum Erzeugen eines Modells (M100) eines Objekts (100), das in mehreren Herstellungs-Schritten (S1,...,S3) herzustellen ist, umfassend die Schritte:
- Bereitstellen von Teilmodellen (M100), die geometrische Merkmale (G120, G130, G135, G140) für die Herstellungs-Schritte (S1,...,S3) aufweisen,
- Zuordnen von funktionalen Merkmale (F120, F135, F104) zu jeweils zumindest einem der geometrischen Merkmale (G120, G130, G135, G140).

11. Verfahren nach Anspruch 11, umfassend:
- Zuordnen von Herstellungsverfahren zu den Merkmalen (F120, F135, F104, G120, G130, G135, G140).

12. Verfahren nach Anspruch 11 oder 12, umfassend ein Erzeugen zumindest einer für eine menschliche Wahrnehmung ausgestalteten Darstellung für eines der Teilmodelle (M100), wobei die dem Teilmodell (M100) zugeordneten Merkmale (F120, F135, F104, G120, G130, G135, G140) so dargestellt sind, dass Werte der Merkmale direkt entnommen werden können.

13. Verfahren nach einem der Ansprüche 11 bis 13, umfassend ein Zuordnen von ein oder mehreren Anforderungen an Fähigkeiten für jedes der funktionalen Merkmale (F120, F135, F104), wobei die Fähigkeiten (S100) von Fertigungsanlagen zum Durchführen zumindest eines Herstellungs-Schritts (S1,...,S3) zur Verfügung gestellt werden.
